# EUROPEAN PATENT SPECIFICATION

(11) **EP 2 808 781 B1**
(45) Date of publication and mention of the grant of the patent: **09.05.2018**
(21) Application number: 14169965.2
(22) Date of filing: 27.05.2014
(51) Int. Cl.: G06F 3/14

(54) **Method, storage medium, and electronic device for mirroring screen data**
Verfahren, Speichermedium und elektronische Vorrichtung zur Spiegelung von Bildschirmdaten
Procédé, support de stockage et dispositif électronique pour le miroitage de données d'écran

(30) Priority: 30.05.2013 KR 20130062046
(43) Date of publication of application: 03.12.2014
(73) Proprietor: Samsung Electronics Co., Ltd., Gyeonggi-do 443-742 (KR)
(72) Inventor: Hong, Duk-Ki, 443-742 Gyeonggi-do (KR); Lee, Ju-Youn, 443-742 Gyeonggi-do (KR); Lee, Yang-Don, 443-742 Gyeonggi-do (KR); Kang, Hyuk, 443-742 Gyeonggi-do (KR)
(74) Representative: HGF Limited

(56) References cited:
- CN-A- 102 662 779
- JP-A- 2011 248 761
- KR-B1- 101 218 294
- US-A1- 2006 031 779
- US-A1- 2006 190 826

## Description

### Field of the Invention

The present disclosure relates to an electronic device, and more particularly to a method of mirroring screen data in an electronic device.

### Background to the Invention

Digital multimedia services are increasingly provided on mobile phones, such as a video. However, due to a limitation in a screen size, multiple people have difficulty viewing the mobile phone at the same time. Accordingly, mobile phones are increasingly equipped to output a signal to a display device, such as a TeleVision (TV) or a projector.

A mobile phone having a TV out function can output a video including a broadcast displayed on a screen to an external display device. Accordingly, a user can view a broadcast through a larger size screen by outputting image data to an external display device downloaded from a web server or photographed using a camera. Examples of types evolved from the TV out function include a Wi-Fi Display (WFD), airplay mirroring and the like.

When a screen of a mobile phone is mirrored on another display device, personal information may be often exposed to another person unintentionally.

Particularly, a window, such as a password window or a message window requiring secret information, is displayed during a presentation through mirroring between a mobile phone and a TV. Sensitive information is often exposed, such as the password or trace route needed to release a lock screen.

US-2006/0031779-A1 discloses methods for providing screen sharing techniques to selectively share portions of the screen between a source node and a consumer node. The source node may transmit screen data to a consumer node. The techniques provide a mechanism for not sharing a selective portion of source node screen.

KR-10-1,218,294-B1 discloses a mobile terminal and screen sharing method to control an external display device when the mobile terminal shares output images with the external display device, so that personal information is not exposed to the external display device.

CN-10-2,662,779-A discloses a method for preventing a handheld device from locking screen automatically when in use.

### Summary of the Invention

An aspect of the present disclosure is to provide a method of preventing secret information of a user from being exposed, and protecting secret information while mirroring displays of an electronic device and an external display device.

Another aspect of the present disclosure provides a method of mirroring screen data in an electronic device, the method including communicatively coupling with an external display device, mirroring first screen data displayed on a display of the electronic device by transmitting the screen data to the external display device for display, and in response to detection of a hand of a user in an image captured by a camera module, transmitting second screen data to the external display device for display. The second screen data may includes a black screen, a predetermined image, a predetermined text, or the first screen data from the time before the detection of the preset event. Another aspect of the present disclose provides an electronic device including a communication module, a display configured to display screen data, a camera module, a sensor module, and a processor configured to: communicatively couple, via the communication module, the electronic device with an external display device, mirror the first screen data displayed on the display by transmitting the screen data to the external display device for display, and in response to detection of a hand of a user in an image captured by a camera module, transmitting second screen data to the external display device for display. The second screen data may includes a black screen, a predetermined image, a predetermined text, or the first screen data from the time before the detection of the preset event. Another aspect of the present disclosure proviudes a machine-readable storage medium recording program instructions, the program instructions executable by a processor to: communicatively couple an electronic device with an external display device, mirror first screen data displayed on a display of the electronic device by transmitting the screen data to the external display device, and in response to detection of a hand of a user in an image captured by a camera module, transmitting second screen data to the external display device for display. The second screen data may includes a black screen, a predetermined image, a predetermined text, or the first screen data from the time before the detection of the preset event.

### Brief Description of the Drawings

The present disclosure will be more apparent from the following detailed description taken in conjunction with the accompanying drawings, in which:
FIG. 1 is a block diagram schematically illustrating an electronic device according to an embodiment of the present disclosure;
FIG. 2 is a front perspective view of an electronic device according to various embodiments of the present disclosure;
FIG. 3 is a rear perspective view of an electronic device according to various embodiments of the present disclosure;
FIG. 4 is a view illustrating a touch screen according to an embodiment of the present disclosure;
FIG. 5 is a block diagram schematically illustrating a display device according to an embodiment of the present disclosure;
FIG. 6 illustrates example mirroring between an electronic device and a display device;
FIG. 7 is a flowchart describing an example sequence of steps for mirroring screen data according to an embodiment of the present disclosure;
FIGs. 8A to 8C are views describing a method of setting a mirroring limitation according to an embodiment of the present disclosure;
FIGs. 9A to 9C are views describing a limited mirroring method according to an embodiment of the present disclosure;
FIGs. 10A to 10C are views describing a limited mirroring method according to another embodiment of the present disclosure;
FIGs. 11A to 11C are views describing a limited mirroring method according to another embodiment of the present disclosure;
FIGs. 12A to 12C are views describing a limited mirroring method according to another embodiment of the present disclosure; and
FIGs. 13A to 13C are views describing a limited mirroring method according to another embodiment of the present disclosure.

### Description of Embodiments of the Invention

Various example embodiments will now be described more fully with reference to the accompanying drawings in which some example embodiments are shown. Therefore, it should be understood that there is no intent to limit example embodiments to the particular forms disclosed, but on the contrary, example embodiments are to cover all modifications, equivalents, and alternatives falling within the ambit of the disclosure.

While terms including ordinal numbers, such as "first" and "second," etc., may be used to describe various components, such components are not limited by the above terms. The terms are used merely for the purpose to distinguish an element from the other elements. For example, a first element could be termed a second element, and similarly, a second element could be also termed a first element without departing from the ambit of the present disclosure. As used herein, the term "and/or" includes any and all combinations of one or more of the associated listed items.

The terms used in this application is for the purpose of describing particular embodiments and is not intended to be limiting of the disclosure. As used herein, the singular forms are intended to include the plural forms as well, unless the context clearly indicates otherwise. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification. Such terms as those defined in a generally used dictionary are to be interpreted to have the meanings equal to the contextual meanings in the relevant field of art, and are not to be interpreted to have ideal or excessively formal meanings unless clearly defined in the present specification.

In the present disclosure, an electronic device or a display device may be any suitable device, and the electronic device may be referred to as, for example, a portable terminal, a mobile terminal, a communication terminal, a portable communication terminal, a portable mobile terminal or the like.

For example, the electronic device or the display device may be a smart phone, a mobile phone, a game machine, a Television (TV), a head unit for a vehicle, a notebook computer, a laptop computer, a tablet computer, a Personal Media Player (PMP), a Personal Digital Assistant (PDA) or the like. The electronic device may be implemented as a portable communication terminal of a pocket size having a wireless communication function. Further, the electronic device or the display device may be a flexible device, a flexible display device, a transparent display device or the like. In addition, the display device may be a projector which can be connected with the electronic device, and the projector may project light on an external screen to display a mirrored screen.

The electronic device according to an embodiment of the present disclosure is a mobile phone, and some components of the electronic device may be omitted or changed from representative components of the electronic device as desired.

The display device according to an embodiment of the present disclosure is a TV, and some components of the electronic device may be omitted or changed from representative components of the electronic device as desired.

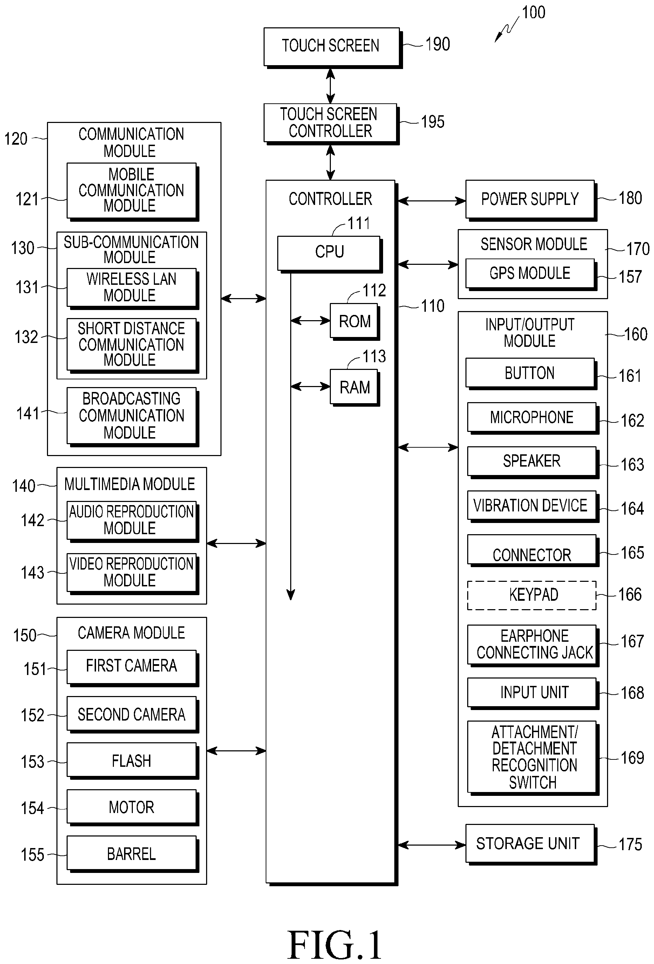

FIG. 1 is a block diagram schematically illustrating an electronic device according to an embodiment of the present disclosure.

Referring to FIG. 1, an electronic device 100 may be connected with an external electronic device (not shown) by using at least one of a communication module 120, a connector 165, or an earphone connecting jack 167. The external electronic device may be attached to or detached from the electronic device 100 through a wire. The external electronic device may be an earphone, an external speaker, a Universal Serial Bus (USB) memory, a charger, a cradle/dock, a DMB (Digital Multimedia Broadcasting) antenna, a mobile payment related device, a health management device (blood sugar tester or the like), a game machine, a car navigation device or the like. Further, the electronic device may include a Bluetooth communication device, a Near Field Communication (NFC) device, a Wi-Fi Direct communication device, and a wireless Access Point (AP) which can be wirelessly connected. In addition, the electronic device 100 may be connected with another portable terminal or another electronic device, for example, one of a mobile phone, a smart phone, a tablet Personal Computer (PC), a desktop PC, and a server through a wired cable or wirelessly.

Referring to FIG. 1, the electronic device 100 includes at least one touch screen 190 and at least one touch screen controller 195. Further, the electronic device 100 may include a controller 110, a communication module 120, a multimedia module 140, a camera module 150, an input/output module 160, a sensor module 170, a storage unit 175, and a power supplier 180.

The communication module 120 may include a mobile communication module 121, a sub communication module 130, and a broadcasting communication module 141.

The sub communication module 130 my include at least one of a wireless Local Area Network (LAN) module 131 or a short distance communication module 132, and the multimedia module 140 may include at least one of an audio reproduction module 142 or a video reproduction module 143.

The controller 110 may include a Central Processing Unit (CPU) 111, a Read Only Memory (ROM) 112 storing a control program for controlling the electronic device 100, and a Random Access Memory (RAM) 113 used as a storage area for storing a signal or data input from the outside of the electronic device 100 or for work performed in the electronic device 100. The CPU 111 may include a single core, a dual core, a triple core, or a quadruple core. The CPU 111, the ROM 112, and the RAM 113 may be mutually connected to each other through an internal bus.

The controller 110 may control the communication module 120, the multimedia module 140, the camera module 150, the input/output module 160, the sensor module 170, the storage unit 175, the power supplier 180, the touch screen 190, and the touch screen controller 195.

The controller 110 detects a user input when, in a state where a plurality of objects are displayed on the touch screen 190, the input unit 168 (or a touchable user input means, such as a user's finger) touches or approaches one object or is located close to the object, and identifies an object corresponding to a position of the touch screen 190 where the user input is generated. The user input through the touch screen 190 may include at least one of a direct touch input (directly touching the displayed object), or a hovering input (an indirect touch input of approaching the displayed object within a preset recognition range, but not directly touching the object). For example, when the input unit 168 is located close to the touch screen 190, an object located directly below the input unit 168 may be selected. According to the present disclosure, user inputs may include a gesture input through the camera module 150, a switch/button input through a button 161 or a keypad 166, a voice input through a microphone 162 or the like, as well as the user input through the touch screen 190.

The object that is displayed or is to be displayed on the touch screen 190 and may include, for example, at least one of an application, a menu function item, a document, a widget, a picture, a video, an e-mail, an SMS message, or an MMS message. Further, the object may be selected, executed, deleted, canceled, stored, and changed by the user input means. The object may have a wide range of meanings encompassing buttons, short-cut icons, thumbnail images or folders in the portable device that store at least one object. The menu in the present disclosure indicates an executable function, for example, an icon, a function item or the like. Further, the function item may be displayed in the form of an icon or a text.

The short-cut icon is displayed on the touch screen 190 of the electronic device 100 to allow rapid execution of each application or operation of a call, a contact number, a menu or other functions provided by the electronic device 100.

When a user input event is generated with respect to a preset object, or according to a preset manner, the controller 110 may provide a preset vibration effect corresponding to the user input event. The vibration effect may be provided in response to an input by the user's finger or the input unit 168.

In order to provide the vibration effect, the controller 110 may output a control signal to the input unit 168 or the vibration device 164. The control signal may include information on a vibration pattern and the input unit 168, or the vibration device 164 may generate a vibration according to a vibration pattern. The information on the vibration pattern may include the vibration pattern itself or an indicator of the vibration pattern. Alternatively, the control signal may include a request for generating the vibration.

The electronic device 100 may include at least one of the mobile communication module 121, the wireless LAN module 131, or the short distance communication module 132 according to a capability thereof.

The mobile communication module 121 enables the electronic device 100 to be connected with an external electronic device through mobile communication by using one antenna or a plurality of antennas (not shown) according to a control of the controller 110. The mobile communication module 121 transmits/receives a wireless signal for a voice call, a video call, a Short Message Service (SMS), or a Multimedia Message Service (MMS) to/from a mobile phone (not shown), a smart phone (not shown), a tablet PC, or another device (not shown) having a phone number input into the electronic device 100.

The sub communication module 130 may include at least one of the wireless LAN module 131 or the short distance communication module 132. For example, the sub communication module 130 may include the wireless LAN module 131, the short distance communication module 132, or both the wireless LAN module 131 and the short distance communication module 132.

The wireless LAN module 131 may access the Internet in a place where a wireless Access Point (AP) (not shown) is installed according to a control of the controller 110. The wireless LAN module 131 supports a wireless LAN standard (IEEE802.11x) of the Institute of Electrical and Electronics Engineers (IEEE). The short distance communication module 132 may wirelessly perform short distance communication between the electronic device 100 and an external electronic device according to a control of the controller 110. A short distance communication scheme may include Bluetooth, Infrared Data Association (IrDA) communication, WiFi-Direct communication, Near Field Communication (NFC) or the like.

The controller 110 may transmit the control signal according to the vibration pattern to the input unit 168 through the sub communication module 130.

The broadcasting communication module 141 may receive a broadcasting signal (for example, a TV broadcasting signal, a radio broadcasting signal, or a data broadcasting signal) and broadcasting supplement information (for example, Electronic Program Guide: EPG or Electronic Service Guide: ESG) output from a broadcasting station through a broadcasting communication antenna (not shown) according to a control of the controller 110

The multimedia module 140 may include the audio reproduction module 142 or the video reproduction module 143. The audio reproduction module 142 may reproduce a digital audio file (for example, a file having a file extension of mp3, wma, ogg, or wav) stored or received according to a control of the controller 110. The video reproduction module 143 may reproduce a digital video file (for example, a file having a file extension of mpeg, mpg, mp4, avi, mov, or mkv) stored or received according to a control of the controller 110.

The multimedia module 140 may be integrated in the controller 110.

The camera module 150 may include at least one of a first camera 151 or a second camera 152 for photographing a still image or a video according to a control of the controller 110. Further, the camera module 150 may include at least one of a barrel 155 performing a zoom-in/out for photographing the subject, a motor 154 controlling a zoom-in/out motion of the barrel 155, or a flash 153 providing an auxiliary light source required for photographing the subject. The first camera 151 may be disposed at a front surface of the electronic device 100, and the second camera 152 may be disposed at a rear surface of the electronic device 100. In a different scheme, the first camera 151 and the second camera 152 may be disposed adjacently to each other (for example, an interval between the first camera 151 and the second camera 152 is larger than 1 cm and smaller than 8 cm) to photograph a three dimensional still image or a three dimensional video.

Each of the first and second cameras 151 and 152 may include a lens system, an image sensor or the like. The first and second cameras 151 and 152 may convert an optical signal input (or photographed) through the lens system to an electrical image signal and output the converted electrical image signal to the controller 110. Then, the user can photograph a video or a still image through the first and second cameras 151 and 152.

The input/output module 160 may include at least one button 161, at least one microphone 162, at least one speaker 163, at least one vibration device 164, the connector 165, the keypad 166, the earphone connection jack 167, and the input unit 168. The input/output module 160 is not limited thereto, and a mouse, a trackball, a joystick, or a cursor control such as cursor direction keys may be provided for controlling a motion of a cursor on the touch screen 190.

The button 161 may be formed on a front surface, a side surface, or a rear surface the housing (or case) of the electronic device 100, and may include at least one of a power/lock button, a volume button, a menu button, a home button, a back button, or a search button.

The microphone 162 receives a voice or a sound and generates an electrical signal according to a control of the controller 110.

The speaker 163 may output sounds corresponding to various signals or data (for example, wireless data, broadcasting data, digital audio data, digital video data or the like) to the outside of the electronic device 100 according to a control of the controller 110. The speaker 163 may output a sound (for example, button tone corresponding to phone communication, ringing tone, and a voice of another user) corresponding to a function performed by the electronic device 100. One or more speakers 163 may be formed on a suitable position or positions of the housing of the electronic device 100.

The vibration device 164 may convert an electrical signal to a mechanical vibration according to a control of the controller 110. For example, when the electronic device 100 in a vibration mode receives a voice or video call from another device (not shown), the vibration device 164 is operated. One or more vibration devices 164 may be formed within the housing of the electronic device 100. The vibration device 164 may operate in accordance with a user input through the touch screen 190.

The connector 165 may be used as an interface for connecting the electronic device 100 with an external electronic device or a power source (not shown). The controller 110 may transmit or receive data stored in the storage unit 175 of the electronic device 100 to or from an external electronic device through a wired cable connected to the connector 165. The electronic device 100 may receive power from the power source through the wired cable connected to the connector 165 or charge a battery (not shown) by using the power source.

The keypad 166 may receive a key input from the user for a control of the electronic device 100. The keypad 166 includes a physical keypad (not shown) formed in the electronic device 100 or a virtual keypad (not shown) displayed on the touch screen 190. The physical keypad formed in the electronic device 100 may be excluded according to a capability or a structure of the electronic device 100.

An earphone (not shown) maybe inserted into the earphone connecting jack 167 to be connected with the electronic device 100.

The input unit 168 may be inserted into the inside of the electronic device 100 and withdrawn or separated from the electronic device 100 when being used. An attachment/detachment recognition switch 169 which operates in accordance with an installation and attachment/detachment of the input unit 168 is located in one area within the electronic device 100 into which the input unit 168 is inserted, and the attachment/detachment recognition switch 169 may output signals corresponding to the installation and separation of the input unit 168 to the controller 110. The attachment/detachment recognition switch 169 may be configured to directly/indirectly contact the input unit 168 when the input unit 168 is mounted. Accordingly, the attachment/detachment recognition switch 169 generates a signal corresponding to the attachment or the detachment (that is, a signal notifying of the attachment or the detachment of the input unit 168) based on whether the attachment/detachment recognition switch 169 is connected with the input unit 168 and then outputs the generated signal to the controller 110.

The sensor module 170 includes at least one sensor for detecting a state of the electronic device 100. For example, the sensor module 170 may include at least one of a proximity sensor for detecting whether the user approaches the electronic device 100, an illumination sensor (not shown) for detecting an amount of ambient light of the electronic device 100, a motion sensor (not shown) for detecting a motion (for example, rotation, acceleration, or vibration of the electronic device 100) of the electronic device 100, a geo-magnetic sensor for detecting a point of the compass by using the Earth's magnetic field, a gravity sensor for detecting a gravity action direction, an altimeter for measuring an atmospheric pressure to detect an altitude, or a Global Positioning System (GPS) module 157.

The GPS module 157 may receive radio waves from a plurality of GPS satellites (not shown) in Earth's orbit and calculate a position of the electronic device 100 by using Time of Arrival from the GPS satellites to the electronic device 100.

The storage unit 175 may store a signal or data input/output according to the operation of the communication module 120, the multimedia module 140, the camera module 150, the input/output module 160, the sensor module 170, or the touch screen 190. The storage unit 175 may store a control program and applications for controlling the electronic device 100 or the controller 110.

The term "storage unit" is used as a term which refers to a data storage device such as the storage unit 175, the ROM 112 or the RAM 113 within the controller 110, or a memory card (for example, an SD card or a memory stick) installed in the electronic device 100. The storage unit 175 may include a non-volatile memory, a volatile memory, or a Hard Disk Drive (HDD) or a Solid State Drive (SSD).

Further, the storage unit 175 may store applications having various functions such as a navigation function, a video call function, a game function, and a time based alarm function, images for providing a Graphical User Interface (GUI) related to the applications, databases or data related to a method of processing user information, a document, and a touch input, background images (a menu screen, an idle screen or the like) or operating programs required for driving the electronic device 100, or images photographed by the camera module 150. The storage unit 175 is a machine (for example, computer)-readable medium, and the term of the machine-readable medium may be defined as a medium for providing data to the machine to perform a specific function. The storage unit 175 may include a non-volatile medium and a volatile medium. All of these media should be a tangible type that allows the commands transferred by the media to be detected by a physical instrument in which the machine reads the commands into the physical instrument.

The machine-readable medium includes at least one of a floppy disk, a flexible disk, a hard disk, a magnetic tape, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), or a flash-EPROM, but is not limited thereto.

The power supply 180 may supply power to one or more batteries arranged at the housing of the electronic device 100 according to a control of the controller 110. The one or more batteries supply power to the electronic device 100. Further, the power supply 180 may supply power input from an external power source through a wired cable connected to the connector 165 to the electronic device 100. In addition, the power supply 180 may supply power wirelessly input from the external power source through a wireless charging technology to the electronic device 100.

The electronic device 100 may include at least one touch screen 190 providing graphical user interfaces corresponding to various services (for example, a phone call, data transmission, broadcasting, or photography function) to the user.

The touch screen 190 may output an analog signal corresponding to at least one user input into the user graphical interface to the touch screen controller 195.

The touch screen 190 may receive at least one user input through a user's body (for example, one or more fingers) or the input unit 168 (for example, a stylus pen or an electronic pen).

The touch screen 190 may receive successive motions of one touch (that is, a drag input). The touch screen 190 may output an analog signal corresponding to the successive motions of the input touch to the touch screen controller 195. The drag occurs when the user moves the user's finger or the input unit 168 while contacting the touch screen display 190. The drag may be referred to a drag touch, a swipe touch or a sliding touch.

The touch used in the present disclosure is not limited to a contact between the touch screen 190 and the finger or input unit 168, and may include a noncontact input (for example, a case where the user input means is located within a recognition distance (for example, 1 cm) where the user input means can be detected without a direct contact). A distance or interval within which the user input means can be recognized in the touch screen 190 may be changed according to a capacity or structure of the electronic device 100. Particularly, the touch screen 190 is configured to output different values (for example, including a voltage value or a current value as an analog value) detected by a direct touch event and a hovering event so that the direct touch event and the indirect touch event (that is, the hovering event) can be distinguishably detected.

The touch screen 190 may be implemented in, for example, a resistive type, a capacitive type, an infrared type, an acoustic wave type, or a combination thereof.

Further, the touch screen 190 may include two or more touch panels which can detect touches or approaches of the finger and the input unit 168, in order to receive inputs by the finger and the input unit 168, respectively. The two or more touch panels provide different output values to the touch screen controller 195. Then, the touch screen controller 195 may recognize the different values input to the two or more touch panels to distinguish whether the input from the touch screen 190 is an input by the finger, or an input by the input unit 168.

The touch screen controller 195 converts an analog signal received from the touch screen 190 to a digital signal and transmits the converted digital signal to the controller 110. The controller 110 may control the touch screen 190 by using the digital signal received from the touch screen controller 195. For example, the controller 110 allows a short-cut icon (not shown) or an object displayed on the touch screen 190 to be executed in response to the direct touch event or the hovering event. Further, the touch screen controller 195 may be integrated with the controller 110.

The touch screen controller 195 may identify a hovering interval or distance as well as a position of the user input by detecting a value (for example, a current value or the like) output through the touch screen 190, convert the identified distance value to a digital signal (for example, a Z coordinate), and then provide the converted digital signal to the controller 110. Further, the touch screen controller 190 can detect a pressure applied to the touch screen 190 by the user input means by detecting the value (for example, the current value or the like) output through the touch screen 190, convert the identified pressure value to a digital signal, and then provide the converted digital signal to the controller 110.

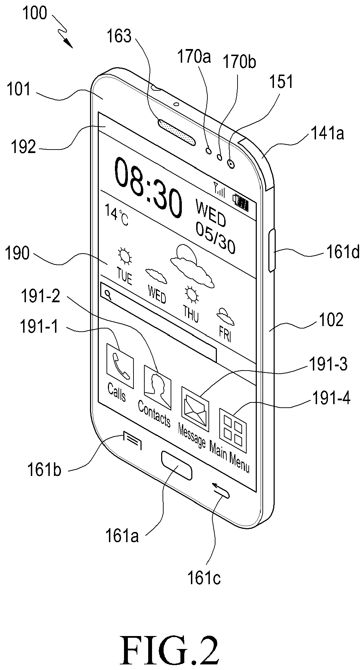

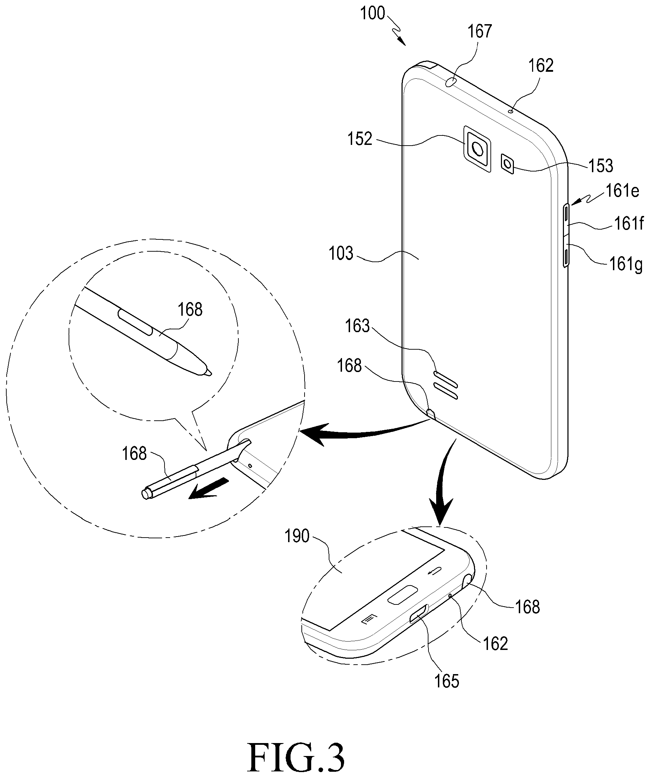

FIG. 2 is a front perspective view of the electronic device according to an embodiment of the present disclosure, and FIG. 3 is a rear perspective view of the electronic device according to an embodiment of the present disclosure.

Referring to FIGs. 2 and 3, the touch screen 190 is disposed on a center of a front surface 101 of the electronic device 100. The touch screen 190 may have a large size to occupy most of the front surface 101 of the electronic device 100. FIG. 2 shows an example where a main home screen is displayed on the touch screen 190. The main home screen is a first screen displayed on the touch screen 190 when power of the electronic device 100 is turned on. When the electronic device 100 includes a plurality of pages of different home screens, the main home screen may be the first home screen among the plurality of pages of home screens. Short-cut icons 191-1, 191-2, and 191-3 for executing frequently used applications, a main menu switching key 191-4, time, weather or the like may be displayed on the home screen. When the user selects the main menu switching key 191-4, the menu screen is displayed on the touch screen 190. Further, a status bar 192 which displays the status of the electronic device 100 such as a battery charging status, a received signal intensity, and a current time may be formed on an upper end of the touch screen 190.

A home button 161a, a menu button 161b, and a back button 161c may be formed on a lower end of the touch screen 190.

The home button 161a displays the main home screen on the touch screen 190. For example, when the home button 161a is selected in a state where a home screen different from the main home screen or the menu screen is displayed on the touch screen 190, the main home screen is displayed on the touch screen 190. Further, when the home button 161a is selected while one or more applications are executed on the touch screen 190, the main home screen shown in FIG. 2 is displayed on the touch screen 190. In addition, the home button 161a may be used to display recently used applications or a task manager on the touch screen 190.

The menu button 161b provides a connection menu which can be displayed on the touch screen 190. The connection menu includes a widget addition menu, a background changing menu, a search menu, an editing menu, an environment setup menu or the like.

The back button 161c can be used for displaying the screen which was executed just before the currently executed screen or terminating the most recently used application.

The first camera 151, an illumination sensor 170a, and a proximity sensor 170b may be disposed on edges of the front surface 101 of the electronic device 100. The second camera 152, a flash 153, and the speaker 163 may be disposed on a rear surface 103 of the electronic device 100.

For example, a power/lock button 161d, volume buttons 161e having a volume increase button 161f and a volume decrease button 161g, a terrestrial DMB antenna 141a for broadcasting reception, and one or more microphones 162 may be disposed on a side surface 102 of the electronic device 100. The DMB antenna 141a may be fixed to the electronic device 100 or may be formed to be detachable from the electronic device 100.

Further, the connector 165 may be formed on a lower side surface of the electronic device 100. A plurality of electrodes are formed in the connector 165, and the connector 165 may be connected to an external device through a wire. The earphone connecting jack 167 may be formed on an upper side surface of the electronic device 100. An earphone may be inserted into the earphone connecting jack 167.

The input unit 168 may be formed on a lower side surface of the electronic device 100. The input unit 168 may be inserted into the electronic device 100 to be stored in the electronic device 100, and withdrawn and detached from the electronic device 100 when being used.

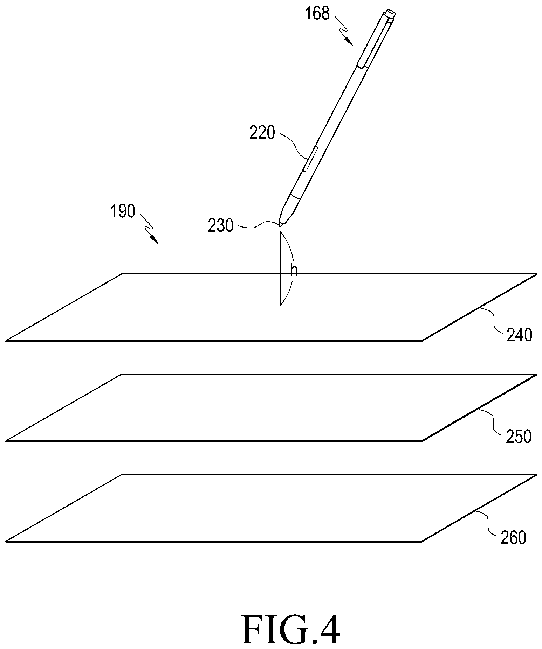

FIG. 4 illustrates the touch screen according to an embodiment of the present disclosure.

As shown in FIG. 4, the touch screen 190 has a configuration in which a first touch panel 240 for detecting a finger, a display panel 250 for displaying a screen, and a second touch panel 260 for detecting a pen input are attached to each other or are sequentially laminated to be partially spaced apart from each other from top to bottom. The first touch panel 240 may alternatively be disposed below the display panel 250.

The display panel 250 includes a plurality of pixels and displays an image utilizing the pixels. The display panel 250 may include a Liquid Crystal Display (LCD), an Organic Light Emitting Diode (OLED), an LED or the like. The display panel 250 displays various operation states, various images according to an application or a service execution, and a plurality of objects.

The first touch panel 240 may include a window displayed on the front surface of the electronic device 100 and a sensor layer accumulated below the window to detect information (position, intensity or the like) of the finger input. The sensor layer includes a sensor for detecting a position when a finger contacts the surface of the window, and accordingly, the sensor layer has preset patterns. The sensor layer may have various patterns, such as a linear grid pattern, a diamond patter or the like. In order to perform a sensor function, the sensor layer receives a scan signal having a preset waveform. When the finger contacts the surface of the window, a detection signal is generated of which the waveform is changed due to capacitance between the sensor layer and the finger. Then, the controller 110 analyzes the detection signal to determine whether the finger has contacted the surface of the window, and to detect a contact position.

In another example, the first touch panel 240 may be a panel which is produced by coating both sides of glass with a thin metal conductive material (for example, an Indium Tin Oxide or "ITO" film) to allow a current to flow on a surface of the glass, and thus is coated with a dielectric that can store a charge. When the finger touches a surface of the first touch panel 240, a predetermined amount of electric charge moves to a touched location due to static electricity, and the first touch panel 240 detects the touched position through recognizing a variation in a current according to the movement of the electric charge.

All touches that cause static electricity may be detected through the first touch panel 240.

The second touch panel 260 may be a touch panel of an Electromagnetic Resonance (EMR) type, and may include an electromagnetic induction coil sensor having a grid structure in which a plurality of loop coils cross each other and an electrical signal processor that sequentially provides alternating current signals having a predetermined frequency to respective loop coils of the electromagnetic induction coil sensor. When the input unit 168 having a resonance circuit therein exists near the loop coil of the second touch panel 260, a signal transmitted from the loop coil generates a current based on mutual electromagnetic induction in the resonance circuit within the input unit 168. Based on the current, the resonance circuit within the input unit 168 generates and outputs an induction signal, and the second touch panel 260 detects the induction signal by using the loop coil to detect an input position of the input unit 168 (that is, an input position of a hovering input position or a direction touch position). Further, the second touch panel 260 may detect a height "h" from a surface of the touch screen 190 to a nib 230 of the input unit 168 based on an intensity of the induction signal. Frequencies of the induction signal output from the input unit 168 may vary according to pressure applied to the surface of the touch screen 190 by the input unit 168, and the pressure of the input unit 168 (that is, pen pressure) may be detected based on the frequency.

Through the second touch panel 260, an input means which can generate a current based on the electromagnetic induction can be detected.

The present disclosure provides a method of preventing secret information from being displayed on the display device while the electronic device 100 mirrors screen data on the display device. The mirroring is performed in real time between the electronic device 100 and the display device but may have a little latency time according to a capability and a communication condition of the electronic device 100 and/or the display device. The real time mirroring refers to real time transmission of screen data that may have such the latency.

The controller 110 controls general operations of the electronic device 100, and controls other components within the electronic device 100 to perform the method of mirroring screen data.

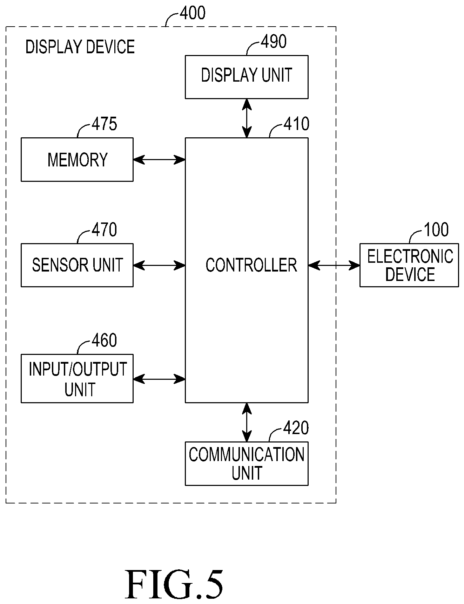

FIG. 5 is a block diagram schematically illustrating the display device according to an embodiment of the present disclosure. The display device has a similar configuration as that of the electronic device. As described above, some component may be omitted or changed from the representative components of the display device as desired.

A display device 400 may include a second controller 410 that corresponds to the controller 110 (hereinafter referred to as a first controller) of the electronic device 100 and controls general operations of the display device 400, a communication unit 420 that corresponds to the communication module 120 of the electronic device 100 and communicates with an external device, an input/output unit 460 that corresponds to the input/output module 160 of the electronic device 100, receives a user input, and outputs information, a sensor unit 470 that corresponds to the sensor module 170 of the electronic device 100 and detects a state of the display device 400, a memory 475 that corresponds to the storage unit 175 of the electronic device 100 and stores data, and a display unit 490 that corresponds to the touch screen 190 of the electronic device 100 and displays a screen.

Since the components corresponding to each other perform similar functions, detailed descriptions of the components of the display device 400 will be omitted.

The method of mirroring the screen data according to the present disclosure is performed according to an interworking between the electronic device 100 configuring the screen data and the display device 400 configuring its own screen according to the screen data received from the electronic device 100.

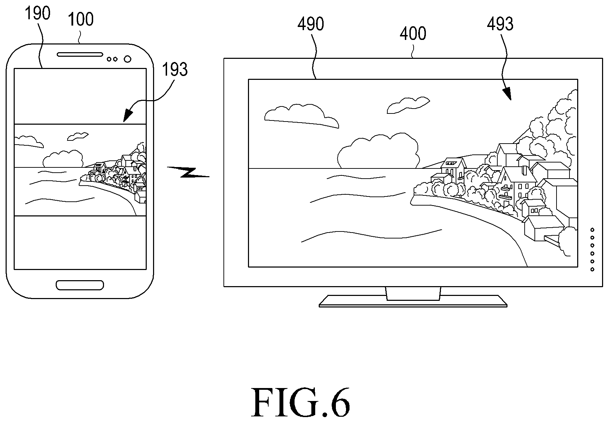

FIG. 6 is a view describing mirroring between the electronic device and the display device.

The electronic device 100 transmits a screen or screen data displayed on the touch screen 190 to the display device 400 in real time through, for example, a wireless short distance communication scheme. The electronic device 100 may convert the screen data displayed on the touch screen 190 by using device information received from the display device 400, such as a size of the display device 400, an aspect ratio (ratio of width to height of the display device), a resolution, and picture quality, and transmit the converted screen data to the display device 400. Alternatively, the conversion of the screen data may be performed by the display device 400. At this time, the screen refers to a visual image displayed on the touch screen 190 and the screen data refers to data configuring the screen. The screen data may be image data, text data, application data or the like. Alternatively, the screen data may be a raster image or a bitmap image of the screen displayed on the touch screen.

The display device 400 receives the screen or the screen data in real time from the electronic device 100 through, for example, a wireless short distance communication scheme and displays the received screen or screen data.

As described above, receiving and displaying various data 193 displayed on the touch screen 190 of the electronic device 100 in real time as data 493 by the display device 400 may be referred to as "mirroring." General mirroring means outputting the same screen output 193 of the electronic device 100 as screen output 493 to another device (display device 400 in the present embodiment). As described below, limited mirroring means blocking some of the screen output of the electronic device 100 and equally outputting the remaining screen output to another device (display device 400 in the present embodiment).

In the following description, the performance of any operation by each device should be understood as the performance of the operation by a controller included in each device through a control of other components by the controller. Further, data generated within each device or received from the outside may be stored in the storage unit or the memory of each device. Based on the description of the operation of each component within each device, it should be understood that the operation performed by the controller is actually performed using the corresponding component. For example, it should be understood that the communication module 120 or the communication unit 420 is used for communication with an external device, the touch screen 190 or the display unit 490 is used for displaying data, and the sensor module 170 or the sensor unit 470 is used for detecting an event or a surrounding environment.

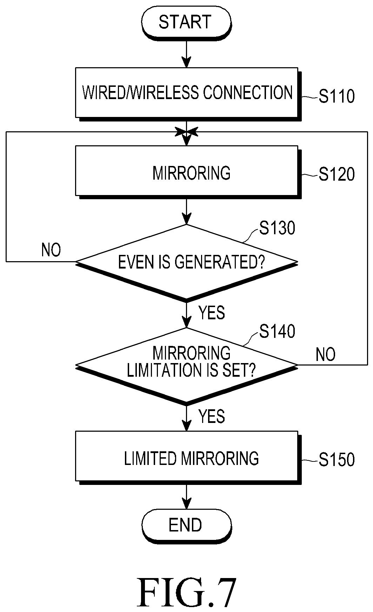

FIG. 7 is a flowchart describing a method of mirroring screen data according to an embodiment of the present disclosure.

Step S110 corresponds to a wired/wireless connection step in which the electronic device 100 and the display device 400 establish a wired or wireless communication connection therebetween. The wired connection may be established using the input/output module 160 and the input/output unit 460 supporting a High-Definition Multimedia Interface (HDMI).

The wireless connection may be established using the communication module 120 and the communication unit 420 supporting wireless communication protocol, such as Wi-Fi (Wireless Fidelity) (802.11x), Wi-Fi Direct, infrared, Zigbee, Near Field Communication (NFC), Radio-Frequency IDentification (RFID), Bluetooth, UltraWideBand (UWB) or the like.

The wired/wireless connection may be initiated by automatically searching for each of the devices, such as the electronic device 100 and the display device 400, by, for example, a connection command of the user, by a connector connection by the user, or by executing the same mirroring applications installed in the electronic device 100 and the display device 400 by the user.

The electronic device 100 may receive device information, such as a resolution of the display device 490, an aspect ratio, picture quality, a model name of the display device 400, a unique identifier or the like, from the display device 400 through the communication module 120 in order to configure screen data. The electronic device 100 may identify the type of display device 400 and the type of display unit of the display device 400 through the device information.

Step S120 corresponds to a mirroring step in which the electronic device 100 generates screen data 193 to be displayed on the touch screen 190. The electronic device 100 simultaneously displays the screen data 193 on the touch screen 190 and transmits the screen data to the display device 400 through the communication module 120.

The electronic device 100 may transmit the screen or the screen data 193 displayed on the touch screen 190 to the display device 400 without any change. Alternatively, the electronic device 100 may convert the screen or the screen data 193 displayed on the touch screen 190 to be suitable for the device information of the display device 400 and transmit the converted screen or screen data to the display device 400 for display as data 493.

Alternatively, the electronic device 100 generates first screen data 193 to be displayed on the touch screen 190 and second screen data 493 to be displayed on the display unit 490, and simultaneously displays the first screen data 193 on the touch screen 190 and transmit the second screen data 493 to the display device 400 through the communication module 120. The first screen data 193 and second screen data 493 have the same contents but different display attributes, such as screen size, aspect ratio, resolution, or picture quality. That is, the first screen data 193 and second screen data 493 indicate the same subject or object.

The electronic device 100 displays a first screen according to the first screen data 193 through the touch screen 190 and the display device 400 displays a second screen according to the second screen data 493 through the display unit 490.

Step S130 corresponds to a step of identifying the generation of an event in which the electronic device 100 determines whether a preset event is generated while mirroring is performed.

The event may be displaying a lock screen by a timer expiration, receiving a call, receiving a message, inputting secret information (various passwords, account number, credit card number or the like), giving an alarm, recognizing an object, recognizing a motion/gesture, recognizing a user or the like. In the present disclosure, an application screen may include a lock screen, an Internet screen, a video application screen or the like.

The electronic device 100 may perform step S140 when the event is generated and repeat steps S120 and S130 when the event is not generated.

Step S140 corresponds to a step of identifying a mirroring limit setup in which the electronic device 100 identifies whether a mirroring limit corresponding to the event is set. The mirroring limitation setup is made before step S110 automatically, by default, or by the user. The mirroring limitation setup may be stored in the storage unit 175 as a database or stored in the storage unit 175 as environment setup information on the corresponding application.

The electronic device 100 may perform step S150 when the mirroring limitation is set and repeat steps S120, S130 and S140 when the mirroring limitation is not set.

Step S150 corresponds to a limited mirroring step in which the electronic device 100 performs mirroring according to the mirroring limitation setup. In the limited mirroring, the first screen displayed on the touch screen 190 and the second screen displayed on the display unit 490 are different from each other. At this time, secret information of the first screen is blocked from the second screen or replaced with another information. Alternatively, the electronic device 100 may transmit the screen before the generation of the event to the display device 400 or a preset image to the display device 400. Alternatively, the electronic device 100 may control the display device to maintain the screen just before the generation of the event or output a preset image or text stored in the display device 400.

The limited mirroring may include at least one of blocking an input device, blocking sensitive information, filtering user input data, temporarily stopping mirroring, and displaying a preset image or text.

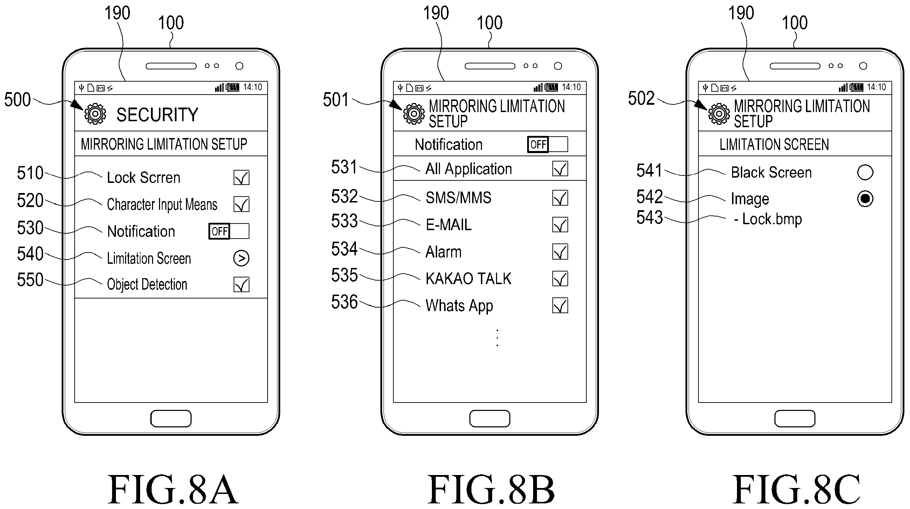

FIGs. 8A to 8C illustrate a method of setting a mirroring limitation according to an embodiment of the present disclosure.

The user may set a mirroring limitation condition and display contents via the limited mirroring by selecting and/or executing the mirroring limitation setup.

The execution of the mirroring limitation setup may be implemented in various ways.

For example, the mirroring limitation setup may be displayed as an icon on the home screen as illustrated in FIG. 2, displayed as an icon within the main menu according to a selection of the main menu switching key 191-4, or provided as a menu within an environment setup when the environment setup within the main menu is executed.

As the mirroring limitation setup is executed, a mirroring limitation setup screen 500 as illustrated in FIG. 8A is displayed.

The mirroring limitation setup screen 500 displays a lock screen menu 510, a character input unit menu 520, a notification menu 530, a limit screen menu 540, and an object detection menu 550.

When the user selects the lock screen menu 510, a screen including an input unit (password input unit, pattern input unit or the like) for releasing a lock screen is displayed on the touch screen 190, and a limited mirroring screen is displayed on the display unit 490, which does not include the input unit.

When the user selects the character input unit menu 520, a screen including a character input unit for inputting a character to a character input window within the executed application is displayed on the touch screen 190, and a limited mirroring screen is displayed on the display unit 490, which does not include the character input unit. The characters may include Korean letters, English letters, Chinese letters, numbers, or symbols, such as a punctuation mark, and may further include a control character such as a shift key or an alt (or an "alternative") key.

Meanwhile, the character input unit menu 520 may be replaced with an input unit menu, and the user may determine whether to display the input unit according to the type of character (phonetic/ideographic character, Korean language, foreign language, number, symbol or the like), the type of input method (button input, writing input, gesture input or the like), the type of input information (security or secret information such as password, cipher, and authentication number, personal information such as date of birth, resident registration number, and phone number, general information such as search word and memo or the like).

When the user selects the notification menu 530, a screen including a message window according to reception of a preset schedule or message (e.g., an e-mail, an SMS message, or an MMS message) is displayed on the touch screen 190 and a screen which does not include the message window is displayed on the display unit 490 during the limited mirroring.

Referring to FIG. 8B, when the user selects the notification menu , a list screen 501 of applications 532 to 536 providing a notification service may also be provided. The user may select an application to apply the mirroring limitation setup from the list of the applications 532 to 536, or select all notification applications 531. The applications include a message application 532 such as a Short Message Service (SMS) or a Multimedia Message Service (MMS), an e-mail application 533, an alarm application 534, a talk application 535 (such as Kakao), or a mobile messenger application 536 (such as WhatsApp).

When the user selects the limitation screen menu 540, a screen 502 corresponding to an event such as an input unit or a message window is displayed on the touch screen 190 and a black screen 541, an empty screen having a random color, or a preset image 543 is displayed on the display unit 490 during the limited mirroring.

Referring to FIG. 8C, when the user selects the limitation screen menu 540, a screen for selecting the black screen 541 or the image 542 is displayed. The black screen also corresponds to one type of the image to be displayed on the display device 400 during the limited mirroring.

In FIG. 8C, it is illustrated that the image 543 of "Lock.bmp" is selected as a default image when the user selects the image 542. However, when the user selects the image 542, a window for selecting images stored in the storage unit 175 may be displayed.

When the user selects the object detection 550, it is set to restrict the mirroring in cases where an image of the object is detected by the camera module 150 (that is, the preset event is generated). As a result, during the limited mirroring, the black screen and/or the limitation screen image may be displayed on the display unit 490.

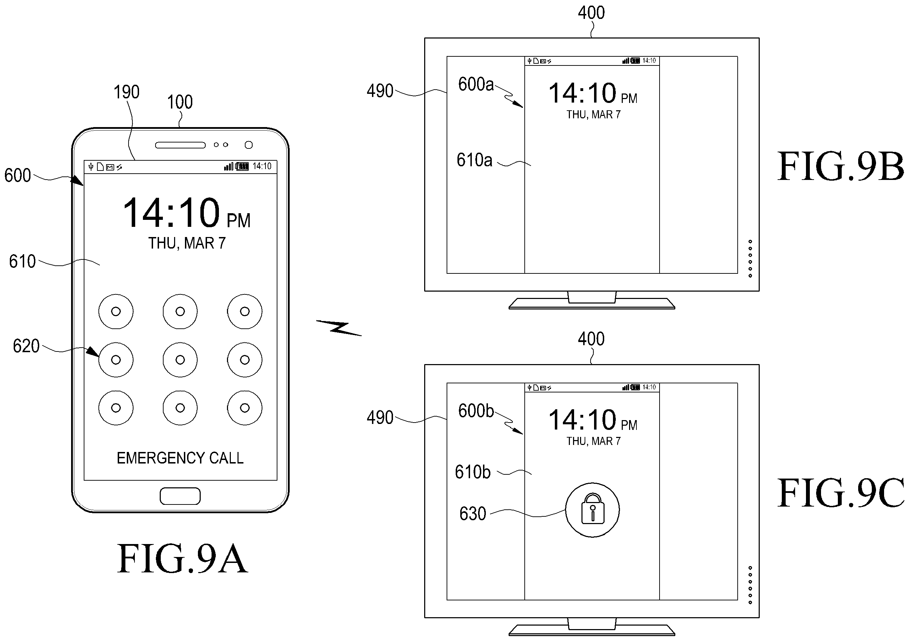

FIGs. 9A to 9C illustrate a limited mirroring method according to an embodiment of the present disclosure.

Referring to FIG. 9A, when a timer set for a lock function expires, a lock screen 610 is displayed on the touch screen 190 of the electronic device 100. The timer runs from when there is no user input detected on the touch screen 190 or the input/output module 160, and expires after the lapse of a preset time. That is, the timer starts from a last user input time point and expires when the preset time elapses.

An entire screen 600 includes the lock screen 610 and a pattern input unit 620. The pattern input unit 620 is overlappingly displayed on the lock screen in the form of a transparent layer. The user can release the lock screen 610 by performing a drag having a preset pattern on the pattern input unit 620. When the lock screen 610 is released, the screen just before the lock function is executed is displayed on the touch screen 190.

The electronic device 100 identifies that the mirroring limitation is set to the lock screen and transmits screen data including the lock screen 610 to the display device 400, excluding the pattern input unit 620 and any visual indicators of the dragged preset pattern. For example, the electronic device 100 may differently generate the first screen data displayed on the electronic device 100 and the second screen data displayed on the display device 400 and transmit the second screen data to the display device 400 without the pattern input unit 620.

The lock screen 610 and the pattern input unit 620 are distinguished by overlappingly displayed layers and the electronic device 100 may configure screen data to be transmitted to the display device 400 by selecting one or more desired layers from the layers on the screen, while excluding other layers.

Referring to FIG. 9B, the display device 400 receives screen data from the electronic device 100 and displays the received screen data on the display unit 490. An entire screen 600a displayed on the display unit 490 includes a lock screen 610a and does not include the pattern input unit 620.

Alternatively, the electronic device 100 identifies that the mirroring limitation is set to the lock screen and transmits screen data including the lock screen 610 and a preset limitation screen image 630 to the display device 400. The limitation screen image 630 may be overlappingly displayed on the lock screen 610 in the form of a transparent layer. The electronic device 100 may select a desired layer from the layers on the entire screen 600 and configure screen data to be transmitted to the display device 400 by adding the layer for the limitation screen image 630.

Referring to FIG. 9C, the display device 400 receives screen data from the electronic device 100 and displays the received screen data on the display unit 490. An entire screen 600b displayed on the display unit 490 includes a lock screen 610b the limitation screen image 630, and does not include the pattern input unit 620.

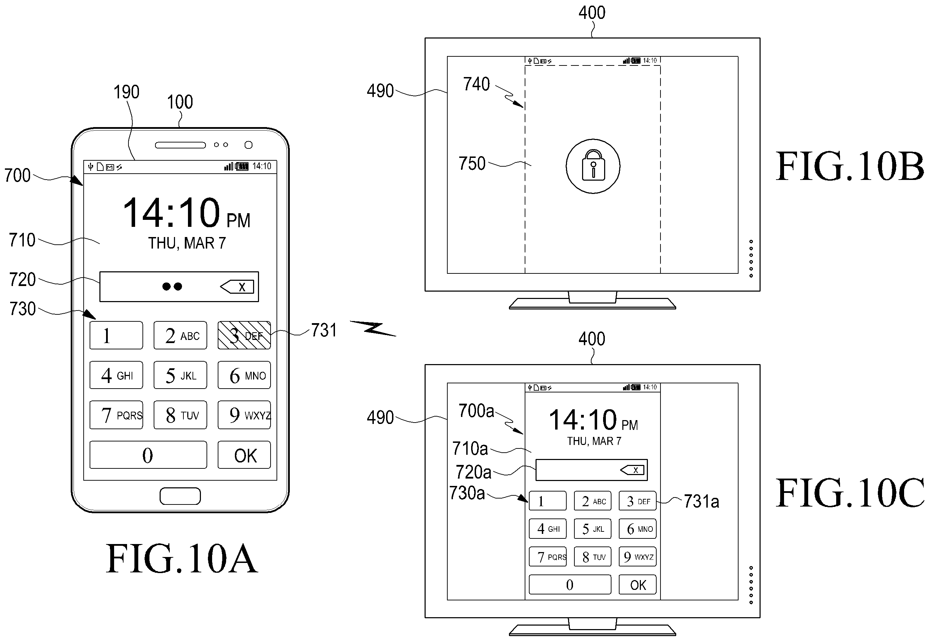

FIGs. 10A to 10C are views describing a limited mirroring method according to another embodiment of the present disclosure.

Referring to FIG. 10A, as a timer set for a lock function expires, a lock screen 710 is displayed on the touch screen 190 of the electronic device 100.

An entire screen 700 includes the lock screen 710, a password input window 720, and a password input unit 730. The password input window 720 and the password input unit 730 are overlappingly displayed on the lock screen 710 in the form of transparent layers. The user can release the lock screen 710 by selecting buttons 731 of the password input unit 730 to input a preset password. When the lock screen 710 is released, the screen just before the lock function was executed is displayed on the touch screen 190.

The electronic device 100 identifies that the mirroring limitation is set to the lock screen and transmits screen data including a black screen 740 and/or a limitation screen image 750 to the display device 400. For example, the electronic device 100 may differently generate the first screen data displayed on the electronic device 100 and the second screen data displayed on the display device 400, and transmit the second screen data to the display device 400.

Referring to FIG. 10B, the display device 400 receives screen data from the electronic device 100 and displays the received screen data on the display unit 490. The black screen 740 displayed on the display unit 490 is an empty screen and the limitation screen image 750 is overlappingly displayed on the black screen 740 in the form of a transparent layer.

Alternatively, the electronic device 100 identifies that the mirroring limitation is set to the lock screen and transmits initial screen data (that is, screen before the user inputs the password) including the lock screen 710, the password input window 720, and the password input unit 730 to the display device 400.

Referring to FIG. 10C, the display device 400 receives screen data from the electronic device 100 and displays the received screen data on the display unit 490. An entire screen 700a displayed on the display unit 490 includes a lock screen 710a, a password input window 720a, and a password input unit 730a. Since the entire screen 700a corresponds to the screen before the user inputs the password, the password input by the user is not displayed on the password input window 720a, and buttons 731a of the password input unit 730a are not also highlighted.

Referring to FIG. 10A, as the user presses a button no. "3" 731, the button no. "3" 731 is highlighted, and a number "3" is encrypted and displayed on the password input window 720. For example, the button no. "3" 731 may be displayed with a different color from other buttons.

Referring to FIG. 10C, user input information is not displayed on the password input window 720a and the password input unit 730a.

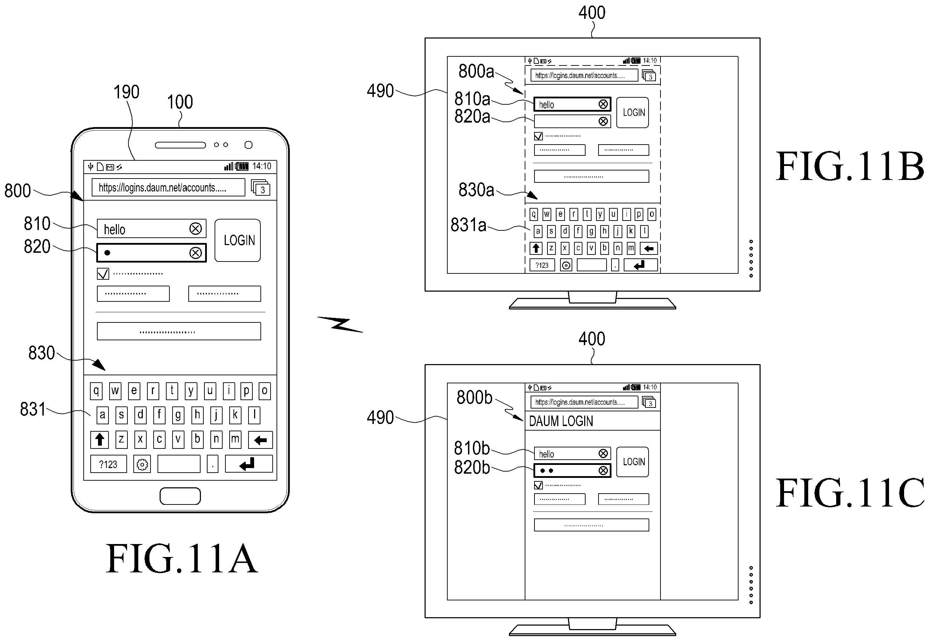

FIGs. 11A to 11C are views describing a limited mirroring method according to another embodiment of the present disclosure.

Referring to FIG. 11A, as the user executes an Internet application, an Internet screen 800 is displayed on the touch screen 190 of the electronic device 100.

Further, as the user selects a password input window 820 of the Internet screen 800, a character input unit 830 is displayed below the Internet screen 800.

The user may input a preset password by selecting buttons 831 of the character input unit 830.

The electronic device 100 identifies that the mirroring limitation is set to the character input unit and transmits screen data including the Internet screen 800 to the display device 400.

Referring to FIG. 11C, the display device 400 receives screen data from the electronic device 100 and displays the received screen data on the display unit 490. The display unit 490 displays an Internet screen 800b including an ID input window 810b and a password input window 820b, but does not display the character input unit 830.

Further, the electronic device 100 identifies an input window requiring an input of secret information between input windows 810 and 820 of the Internet screen 800. Then, the electronic device 100 may not restrict the mirroring when the input window not requiring the input of secret information is selected, and may restrict mirroring when the input window requiring the input of secret information is selected. For example, inputs may be classified by "types", and input types are preset to input windows, respectively. The electronic device 100 may then identify whether an input window requires the input of secret information by identifying whether the input type of the input window is, for example, a "password" type. That is, the electronic device 100 may detect that an input window requires the input of secret information when the input type of the input window is the "password" type, and detect that the input window does not require the input of secret information when the input type is not of the "password" type. Accordingly, in FIGS. 11A - 11C, the electronic device 100 may identify that the input window 810 (used for inputting an identifying log-in) of the Internet screen 800 selected by the user is an input window that does not require the input of secret information, and therefore transmits screen data including the Internet screen 800 and the character input unit 830 to the display device 400.

Referring to FIG. 11B, the display device 400 receives screen data from the electronic device 100 and displays the received screen data on the display unit 490.

The display unit 490 of the display device 400 displays an Internet screen 800a including an ID input window 810a and a password input window 820a, and a character input unit 830a including buttons 831a.

Similarly, the electronic device 100 identifies that the password input window 820 of the Internet screen 800 selected by the user is the input window requiring the input of secret information, and transmits screen data including the Internet screen 800, excluding the character input unit 830 to the display device 400.

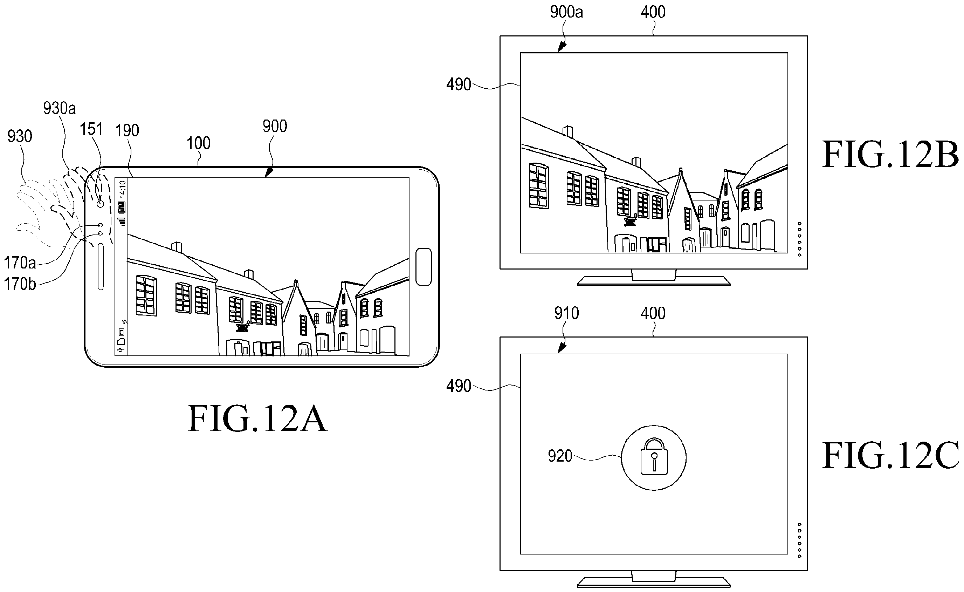

FIGs. 12A to 12C are views describing a limited mirroring method according to another embodiment of the present disclosure.

Referring to FIG. 12A, as the user executes a video application, a video screen 900 is displayed on the touch screen 190 of the electronic device 100. For example, the mirroring limitation setup is made to limit the mirroring when an image of a particular object is detected by the camera module including the first camera 151 (that is, the preset event is generated). At this time, the particular object (for example, a hand 930 of the user) may be located at a position which can be detected by the first camera 151 or the proximity sensor 170b.

The electronic device 100 identifies that there is no mirroring limitation and transmits screen data including the video screen 900 to the display device 400.

Referring to FIG. 12B, the display device 400 receives screen data from the electronic device 100 and displays the received screen data on the display unit 490 as data 900a.

Thereafter, a hand 930a of the user moves to a position detected by first camera 151 or the proximity sensor 170b. At this time, the hand 930a of the user may cover the first camera 151.

The electronic device 100 identifies that an event to which the mirroring limitation is set has been generated, and transmits screen data including a black screen 910 and/or a limitation screen image 920 (of FIG. 12C) to the display device 400.

Referring to FIG. 12C, the display device 400 receives screen data from the electronic device 100 and displays the received screen data on the display unit 490. The black screen 910 displayed on the display unit 490 is an empty screen and the limitation screen image 920 is overlappingly displayed on the black screen 740 in the form of a transparent layer. As described above, the screen just before the event (that is, stopped screen) may be displayed instead of the black screen 910. The release of the black screen 910 or the stopped screen (that is, normal performance of the mirroring before the event) may be made by either passing a hand 930a over or removing the hand 930a which was covering the first camera 151.

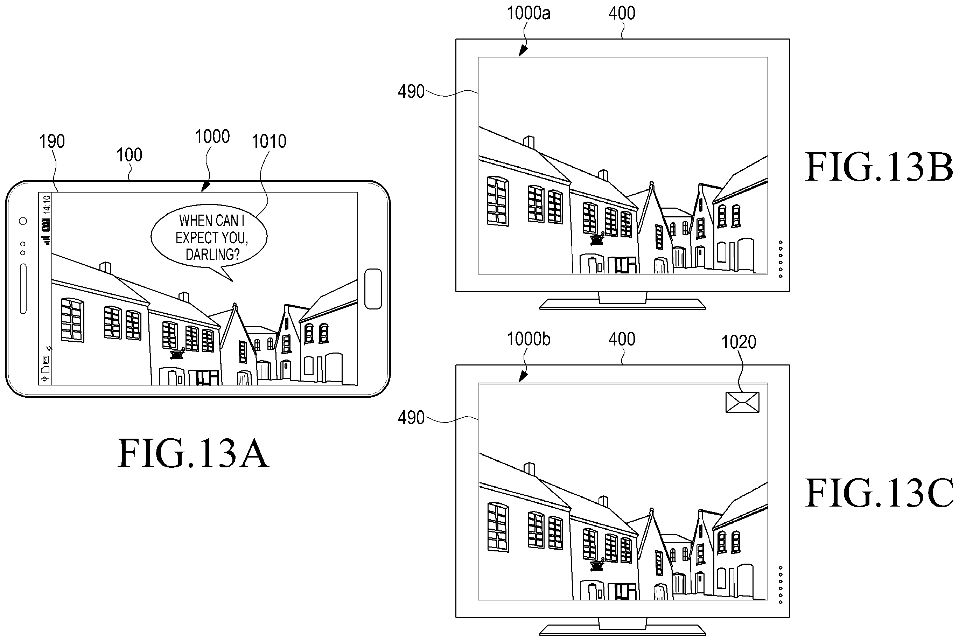

FIGs. 13A to 13C are views describing a limited mirroring method according to another embodiment of the present disclosure.

Referring to FIG. 13A, as the user executes a video application, a video screen 1000 is displayed on the touch screen 190 of the electronic device 100. For example, through the mirroring limitation setup, the mirroring is restricted when a message is received (that is, a preset event is generated).

The electronic device 100 overlappingly displays a received message 1010 on the video screen 1000 in the form of a transparent layer according to the reception of the message.

The electronic device 100 identifies that an event to which the mirroring limitation has been set has been generated, and transmits screen data including the video screen 1000 to the display device 400.

Alternatively, the screen data including the black screen 910 and/or the limitation screen image 920 (of FIG. 12C) may be transmitted to the display device 400.

Referring to FIG. 13B, the display device 400 receives screen data from the electronic device 100 and displays the received screen data on the display unit 490. An entire screen 1000a displayed on the display unit 490 includes the video screen 1000 and does not include the received message 1010.

Meanwhile, since the user who is viewing the display device 400 may not recognize the reception of the message, the electronic device 100 may transmit screen data including the video screen 1000 and/or an indication 1020 (of FIG. 13C) indicating the reception of the message without contents (and sender) of the message to the display device 400.

Referring to FIG. 13C, the display device 400 receives screen data from the electronic device 100 and displays the received screen data on the display unit 490. An entire screen displayed on the display unit 490 includes the video screen 1000 and does not include the received message 1010. Further, the entire screen includes the indication 1020 of the reception of the message.

Although the touch screen has been illustrated as a representative example of the display unit displaying the screen in the above-described embodiments, a general display unit, such as a Liquid Crystal Display (LCD), an Organic Light Emitting Diode (OLED), or a Light Emitting Diode (LED) including those that do not have a touch detection function may also be used instead of the touch screen.

It may be appreciated that the embodiments of the present disclosure can be implemented in software, hardware, or a combination thereof. Any such software may be stored, for example, in a volatile or non-volatile storage device such as a ROM, a memory such as a RAM, a memory chip, a memory device, or a memory IC, or a recordable optical or magnetic medium such as a CD, a DVD, a magnetic disk, or a magnetic tape, regardless of its ability to be erased or its ability to be re-recorded. It is appreciated that the storage unit included in the electronic device is one example of a program including commands for implementing various embodiments of the present disclosure or a machine-readable storage medium suitable for storing programs. Therefore, embodiments of the present disclosure provide a program including codes for implementing a system or method claimed in any claim of the accompanying claims and a machine-readable device for storing such a program. Moreover, such a program as described above can be electronically transferred through an arbitrary medium such as a communication signal transferred through cable or wireless connection, and the present disclosure properly includes the things equivalent to that.

Further, the electronic device may receive the program from a program providing apparatus connected to the electronic device wirelessly or through a wire and store the received program. The program providing apparatus may include a memory for storing a program containing instructions for allowing the electronic device to perform the method of mirroring the screen data and information required for the method of mirroring the screen data, a communication unit for performing wired or wireless communication with the electronic device, and a controller for transmitting the corresponding program to the electronic device according to a request of the electronic device or automatically.

Although specific embodiments are described in the above description of the present disclosure, various modifications can be made without departing from the present disclosure. Accordingly, the present disclosure shall not be limited by the above-described embodiments, and is to be determined by the following claims and their equivalents.

The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

According to the present disclosure, it is possible to prevent secret information of the user from being exposed and protect secret information in mirroring between the electronic device and the external display device.

According to the present disclosure, it is possible to easily set the limited mirroring in the mirroring between the electronic device and the external display device and easily control the limited mirroring by performing the limited mirroring when an object is recognized.

## Claims

1. A method of mirroring screen data in an electronic device (100), the method comprising:
communicatively coupling with an external display device (400);
mirroring first screen data displayed on a display of the electronic device (600) by transmitting the first screen data to the external display device for display (600a); and
in response to detection of a preset event, transmitting second screen data to the external display device for display;
wherein the preset event is detection of a hand of a user in an image captured by a camera module (150) of the electronic device (100); and
wherein the second screen data includes a black screen, a predetermined image, a predetermined text, or the first screen data from the time before the detection of the preset event.

2. The method of claim 1, further comprising receiving device information from the external display device (400).

3. The method of claim 2, wherein the first screen data (610) is converted to correspond to the device information, and the converted first screen data (610a) is transmitted to the external display device.

4. The method of claim 1, wherein the hand is detected in a case of:
visually recognizing the hand (930a).

5. The method of claims 1, wherein the first screen data (610) displayed on the display of the electronic device is different from the second screen data (610a) displayed on the external display device.

6. The method of claim 5, wherein the first screen data includes an application screen (700) and a virtual keypad (730) for inputting a character (731) on the electronic device; and
wherein the second screen data (490) includes the application screen (740) and excludes the virtual keypad (730) .

7. A machine-readable storage medium recording program instructions, the program instructions executable by a processor to:
communicatively couple an electronic device (100) with an external display device (400);
mirror first screen data (193) displayed on a display of the electronic device by transmitting the first screen data to the external display device (400); and
in response to detection of a preset event, transmit second screen data to the external display device for display;
wherein the preset event is detection of a hand of a user in an image captured by a camera module (151) of the electronic device (100); and
wherein the second screen data includes a black screen, a predetermined image, a predetermined text, or the first screen data from the time before the detection of the preset event.

8. An electronic device (100) comprising:
a display unit configured to display first screen data;
a camera module (150);
a processor configured to:
communicatively couple, via a communication module, the electronic device (100) with an external display device (400) ;
mirror the first screen data (193) displayed on the display by transmitting the first screen data to the external display device for display (493); and
in response to detection of a preset event, transmit second screen data to the external display device for display;
wherein the preset event is detection of a hand of a user in an image captured by the camera module (150); and
wherein the second screen data includes a black screen, a predetermined image, a predetermined text, or the first screen data from the time before the detection of the preset event.

9. The electronic device of claim 8, wherein the hand is detected in a case of: visually recognizing the hand (930a).

10. The electronic device of claim 8, wherein the first screen data (600) displayed on the display of the electronic device is different from the second screen data (600a) displayed on the external display device.

11. The electronic device of claim 10, wherein the first screen data includes an application screen (700) and a virtual keypad (730) for inputting a character (731) on the electronic device; and
wherein the second screen data (740) includes the application screen (740) and excludes the virtual keypad (730).

## Patentansprüche

1. Ein Verfahren zur Spiegelung von Bildschirmdaten in einer elektronischen Vorrichtung (100), wobei das Verfahren Folgendes umfasst:
kommunikatives Koppeln mit einer externen Anzeigevorrichtung (400);
Spiegeln der ersten Bildschirmdaten, die auf einer Anzeige der elektronischen Vorrichtung (600) angezeigt werden, indem die ersten Bildschirmdaten zur Anzeige (600a) an die externe Anzeigevorrichtung übertragen werden; und
Übertragen zweiter Bildschirmdaten zur Anzeige an die externe Anzeigevorrichtung infolge der Erkennung eines zuvor festgelegten Ereignisses;
wobei es sich bei dem zuvor festgelegten Ereignis um die Erkennung einer Hand eines Benutzers in einem durch ein Kameramodul (150) der elektronischen Vorrichtung (100) erfassten Bild handelt; und
wobei die zweiten Bildschirmdaten einen schwarzen Bildschirm, ein zuvor bestimmtes Bild, einen zuvor bestimmten Text oder die ersten Bildschirmdaten für den Zeitraum vor der Erkennung des zuvor festgelegten Ereignisses umfassen.

2. Das Verfahren nach Anspruch 1, das weiter umfasst, dass Vorrichtungsinformationen von der externen Anzeigevorrichtung (400) empfangen werden.

3. Das Verfahren nach Anspruch 2, wobei die ersten Bildschirmdaten (610) umgewandelt werden, damit sie den Vorrichtungsinformationen entsprechen, und wobei die umgewandelten ersten Bildschirmdaten (610a) an die externe Anzeigevorrichtung übertragen werden.

4. Das Verfahren nach Anspruch 1, wobei die Hand in dem folgenden Fall erkannt wird:
optisches Erkennen der Hand (930a).

5. Das Verfahren nach Anspruch 1, wobei sich die ersten Bildschirmdaten (610), die auf der Anzeige der elektronischen Vorrichtung angezeigt werden, von den zweiten Bildschirmdaten (610a) unterscheiden, die auf der externen Anzeigevorrichtung angezeigt werden.

6. Das Verfahren nach Anspruch 5, wobei die ersten Bildschirmdaten einen Anwendungsbildschirm (700) und eine virtuelle Tastatur (730) zur Eingabe eines Zeichens (731) in die elektronische Vorrichtung umfassen; und
wobei die zweiten Bildschirmdaten (490) den Anwendungsbildschirm (740) einschließen und die virtuelle Tastatur (730) ausschließen.

7. Ein computerlesbares Speichermedium, auf dem Programmanweisungen gespeichert werden, wobei die Programmanweisungen für folgende Zwecke durch eine Verarbeitungseinheit ausgeführt werden:
kommunikatives Koppeln einer elektronischen Vorrichtung (100) mit einer externen Anzeigevorrichtung (400);
Spiegeln der ersten Bildschirmdaten (193), die auf einer Anzeige der elektronischen Vorrichtung angezeigt werden, indem die ersten Bildschirmdaten an die externe Anzeigevorrichtung (400) übertragen werden; und
Übertragen zweiter Bildschirmdaten zur Anzeige an die externe Anzeigevorrichtung infolge der Erkennung eines zuvor festgelegten Ereignisses;
wobei es sich bei dem zuvor festgelegten Ereignis um die Erkennung einer Hand eines Benutzers in einem durch ein Kameramodul (151) der elektronischen Vorrichtung (100) erfassten Bild handelt; und
wobei die zweiten Bildschirmdaten einen schwarzen Bildschirm, ein zuvor bestimmtes Bild, einen zuvor bestimmten Text oder die ersten Bildschirmdaten für den Zeitraum vor der Erkennung des zuvor festgelegten Ereignisses umfassen.

8. Eine elektronische Vorrichtung (100), die Folgendes umfasst:
eine Anzeigeeinheit, die eingerichtet ist, um erste Bildschirmdaten anzuzeigen;
ein Kameramodul (150);
eine Verarbeitungseinheit, die für folgende Zwecke eingerichtet ist:
kommunikatives Koppeln der elektronischen Vorrichtung (100) mit einer externen Anzeigevorrichtung (400) über ein Kommunikationsmodul;
Spiegeln der ersten Bildschirmdaten (193), die auf der Anzeige angezeigt werden, indem die ersten Bildschirmdaten zur Anzeige (493) an die externe Anzeigevorrichtung übertragen werden; und
Übertragen zweiter Bildschirmdaten zur Anzeige an die externe Anzeigevorrichtung infolge der Erkennung eines zuvor festgelegten Ereignisses;
wobei es sich bei dem zuvor festgelegten Ereignis um die Erkennung einer Hand eines Benutzers in einem durch das Kameramodul (150) erfassten Bild handelt; und
wobei die zweiten Bildschirmdaten einen schwarzen Bildschirm, ein zuvor bestimmtes Bild, einen zuvor bestimmten Text oder die ersten Bildschirmdaten für den Zeitraum vor der Erkennung des zuvor festgelegten Ereignisses umfassen.

9. Die elektronische Vorrichtung nach Anspruch 8, wobei die Hand in dem folgenden Fall erkannt wird: optisches Erkennen der Hand (930a).

10. Die elektronische Vorrichtung nach Anspruch 8, wobei sich die ersten Bildschirmdaten (600), die auf der Anzeige der elektronischen Vorrichtung angezeigt werden, von den zweiten Bildschirmdaten (600a) unterscheiden, die auf der externen Anzeigevorrichtung angezeigt werden.

11. Die elektronische Vorrichtung nach Anspruch 10, wobei die ersten Bildschirmdaten einen Anwendungsbildschirm (700) und eine virtuelle Tastatur (730) zur Eingabe eines Zeichens (731) in die elektronische Vorrichtung umfassen; und
wobei die zweiten Bildschirmdaten (740) den Anwendungsbildschirm (740) einschließen und die virtuelle Tastatur (730) ausschließen.

## Revendications

1. Un procédé d'écriture miroir de données d'écran dans un dispositif électronique (100), le procédé comprenant :
le couplage en communication avec un dispositif d'affichage externe (400),
l'écriture miroir de premières données d'écran affichées sur un dispositif d'affichage du dispositif électronique (600) par la transmission des premières données d'écran au dispositif d'affichage externe pour affichage (600a), et
en réponse à la détection d'un événement prédéfini, la transmission de deuxièmes données d'écran au dispositif d'affichage externe pour affichage,
où l'événement prédéfini est la détection d'une main d'un utilisateur dans une image capturée par un module d'appareil de prise de vues (150) du dispositif électronique (100), et
où les deuxièmes données d'écran comprennent un écran noir, une image prédéterminée, un texte prédéterminé ou les premières données d'écran provenant de l'instant avant la détection de l'événement prédéfini.

2. Le procédé selon la Revendication 1, comprenant en outre la réception d'informations de dispositif à partir du dispositif d'affichage externe (400).

3. Le procédé selon la Revendication 2, où les premières données d'écran (610) sont converties de façon à correspondre aux informations de dispositif et les premières données d'écran converties (610a) sont transmises au dispositif d'affichage externe.

4. Le procédé selon la Revendication 1, où la main est détectée en cas de :
reconnaissance visuelle de la main (930a).

5. Le procédé selon la Revendication 1, où les premières données d'écran (610) affichées sur le dispositif d'affichage du dispositif électronique sont différentes des deuxièmes données d'écran (610a) affichées sur le dispositif d'affichage externe.

6. Le procédé selon la Revendication 5, où les premières données d'écran comprennent un écran d'application (700) et un clavier virtuel (730) destiné à la saisie d'un caractère (731) sur le dispositif électronique, et
où les deuxièmes données d'écran (490) comprennent l'écran d'application (740) et excluent le clavier virtuel (730).

7. Un support à mémoire lisible par ordinateur enregistrant des instructions de programme, les instructions de programme étant exécutables par un processeur de façon à :
coupler en communication un dispositif électronique (100) avec un dispositif d'affichage externe (400),
écrire en miroir des premières données d'écran (193) affichées sur un dispositif d'affichage du dispositif électronique par la transmission des premières données d'écran au dispositif d'affichage externe (400), et
en réponse à la détection d'un événement prédéfini, transmettre des deuxièmes données d'écran au dispositif d'affichage externe pour affichage,
où l'événement prédéfini est la détection d'une main d'un utilisateur dans une image capturée par un module d'appareil de prise de vues (151) du dispositif électronique (100), et
où les deuxièmes données d'écran comprennent un écran noir, une image prédéterminée, un texte prédéterminé ou les premières données d'écran provenant de l'instant avant la détection de l'événement prédéfini.

8. Un dispositif électronique (100) comprenant :
une unité d'affichage configurée de façon à afficher des premières données d'écran,
un module d'appareil de prise de vues (150),
un processeur configuré de façon à :
coupler en communication, par l'intermédiaire d'un module de communication, le dispositif électronique (100) avec un dispositif d'affichage externe (400),
écrire en miroir les premières données d'écran (193) affichées sur le dispositif d'affichage par la transmission des premières données d'écran au dispositif d'affichage externe pour affichage (493), et
en réponse à la détection d'un événement prédéfini, transmettre des deuxièmes données d'écran au dispositif d'affichage externe pour affichage,
où l'événement prédéfini est la détection d'une main d'un utilisateur dans une image capturée par la module d'appareil de prise de vues (150), et
où les deuxièmes données d'écran comprennent un écran noir, une image prédéterminée, un texte prédéterminé ou les premières données d'écran provenant de l'instant avant la détection de l'événement prédéfini.

9. Le dispositif électronique selon la Revendication 8, où la main est détectée en cas de : reconnaissance visuelle de la main (930a).

10. Le dispositif électronique selon la Revendication 8, où les premières données d'écran (600) affichées sur le dispositif d'affichage du dispositif électronique sont différentes des deuxièmes données d'écran (600a) affichées sur le dispositif d'affichage externe.

11. Le dispositif électronique selon la Revendication 10, où les premières données d'écran comprennent un écran d'application (700) et un clavier virtuel (730) destiné à la saisie d'un caractère (731) sur le dispositif électronique, et
où les deuxièmes données d'écran (740) comprennent l'écran d'application (740) et excluent le clavier virtuel (730).
